# EUROPEAN PATENT SPECIFICATION

(11) **EP 2 308 622 B1**
(45) Date of publication and mention of the grant of the patent: **01.08.2018**
(21) Application number: 09802804.6
(22) Date of filing: 24.06.2009
(51) Int. Cl.: B23B 49/04

(54) **DEVICE AND METHOD FOR BORING CENTER HOLE OF CRANKSHAFT**
VORRICHTUNG UND VERFAHREN ZUM BOHREN EINES ZENTRIERLOCHS EINER KURBELWELLE
PROCEDE ET DISPOSITIF DE PERÇAGE D'UN TROU DE CENTRAGE DE VILEBREQUIN

(30) Priority: 30.07.2008 JP 2008195806
(43) Date of publication of application: 13.04.2011
(73) Proprietor: Komatsu NTC Ltd., Nanto-City Toyama 959-1595 (JP)
(72) Inventor: YOSHIMOTO, Akihiro, Komatsu-shi Ishikawa 923-0392 (JP)
(74) Representative: Flügel Preissner Schober Seidel
(86) International application number: PCT/JP2009/061515
(87) International publication number: WO 2010/013559

(56) References cited:
- JP-A- 54 006 188
- JP-A- 2002 018 658
- JP-A- 2002 018 658
- JP-A- 2007 136 604
- JP-A- 2007 136 604
- US-A- 3 479 735
- US-A- 5 131 143

## Description

### TECHNICAL FIELD

The present invention relates to a center hole boring device for, and a method of, boring a center hole to be used for working in both end surfaces of a crankshaft of a material state (i.e., a material crankshaft).

### BACKGROUND ART

The crankshaft is normally used when installed in an engine . When the rotational imbalance occurs in the crankshaft, a variety of troubles occur (e.g., generation of vibration in the engine revolution) . Therefore, the amount of the rotational imbalance (hereinafter simply referred to as "an imbalance value") of a crankshaft is required to be in a predetermined allowable value range. A position of a center hole, used as a reference for working the crankshaft, is important for setting the imbalance value of the crankshaft to be in the allowable value range.

For example, a center hole is formed as follows. First, a balance center axis of a crankshaft of a material state (i.e., a material crankshaft) is found. Specifically, a balance meter measures the balance of the material while the material crankshaft is actually revolved. Then, center holes are bored in both end surfaces of the crankshaft, on the obtained center axis. Further, the balance meter measures balance about the center axis again in the final working phase. When imbalance is found, the balance adjustment is executed by boring a hole in a counterweight.

When the material crankshaft is finished in an ideal shape, matching the design data, it is possible to easily achieve the imbalance value to be in the allowable value range by boring a center hole in the center of a main journal. Even if balance disruption occurs in the subsequent working steps, balance adjustment can be easily executed by boring a hole in the counterweight at the end.

However, thickness of the material crankshaft could be formed unevenly due to a variety of factors including e.g., failure of casting molds, failure of forging molds, impact in trimming and mold stripping. Most of the steps of working the material crankshaft are herein executed for a cylindrical part of a main journal and a cylindrical part of a pin journal. Therefore, the drawback of uneven thickness is resolved for the respective cylindrical parts. However, the thickness of the counterweight remains to be uneven because working is hardly executed for the counterweight. Consequently, the imbalance remains in the entire material crankshaft.

Imbalance accordingly exists in the entire crankshaft even when a hole is bored in the counterweight in the final balance adjustment. Further, when the balance adjustment cannot be completed within a predetermined cycle time, such a crankshaft is regarded as an inferior product. In this case, there is a limitation for the number of holes allowed to be bored in the balance adjustment. Therefore, an imbalance value within the allowable value range cannot be achieved.

Further, an essential portion could be required to be removed from the crankshaft in order to achieve the balance value within the allowable value range.

When the imbalance value of the crankshaft cannot be finally achieved within the allowable value range as described above, modification is required for treatment in the center hole boring processing. Specifically, the misalignment amount of the center hole boring position is computed based on the balance measurement. The misalignment amount is then fed back to the center hole boring processing. Treatment in the center hole boring processing is modified based on the feedback. When a center hole is herein bored in a material crankshaft before the feedback of the misalignment amount, the material crankshaft is regarded as an inferior product due to misalignment of the center hole. Additionally, feedback of the misalignment amount is required every time a product lot of the material is changed. In this case, there is a drawback that a great number of processing steps are required.

Now, Patent Literature 1 (PTL1) describes a method as a technique for determining a position of a center hole in a crankshaft. In the method, a dynamic balance point is obtained for the respective end surfaces of a material crankshaft through a dynamic balance test. Subsequently, shapes of a journal section and the like in the material crankshaft are measured. Imbalance, possibly occurring after working, is arithmetically computed based on the result of the measurement. A center hole is then bored in a corrected position displaced from the dynamic balance point by the imbalance amount.

Further, the following technique is implemented for balance adjustment. A geometric center is herein computed for a cylindrical part of a material crankshaft. A center hole is then bored in the geometric center of the cylindrical part. Working is subsequently executed based on the center hole. Finally, balance adjustment is completed by steps including a step of boring a hole in a counterweight.

US 5,131,143 A refers to a machine for centering and balancing workpieces, in particular a crankshaft. The machine comprises gripping heads, which are provided with work holders. The work holders are adapted to hold the two ends of the workpiece. Furthermore, the machine comprises two spindle units which carry tool holders for holding tools used to machine the workpiece at end faces and for drilling centering bores into the ends of the workpiece and a measuring head. During the measuring the workpiece is supported by a vertically movable work support.

US 3,479,735 A and JP 2002-018658 A disclose center hole boring devices configured to bore a center hole for working on each of the two end surfaces of a material crankshaft.

### CITATION LIST

### Patent Literature

PTL1: Japan Laid-Open Patent Application Publication No. JP-A-S51-076682

### SUMMARY OF INVENTION

### Technical Problem

According to the well-known devices for, and the well-known methods of, boring a center hole including Patent Literature 1 (PTL1), a mismatch is produced between a condition of measuring the shape of the material crankshaft and a condition of boring a center hole based on the data obtained from the measurement.

For example, when a center hole is bored in the geometric center of the cylindrical part of the crankshaft, two cylindrical portions of the crankshaft are normally clamped as reference portions and a center hole is bored in the clamp center. There exists no problem when the clamped cylindrical reference portions are herein formed in accurate circular shapes. When the crankshaft strains due to misalignment of the top and bottom molds in molding the material, however, the crankshaft moves and revolves while being clamped. Accurate clamping is thereby not executed, and a center hole cannot be bored in the geometric center .

It is an object of the present invention to provide a technique for easily and accurately forming a center hole in an appropriate position on a crankshaft.

### Solution to Problem

A center hole boring device according to the present invention is a device according to claim 1 and configured to bore a center hole for working on each of two end surfaces of a material crankshaft. The center hole boring device includes a main clamper, a measurement chuck, a working section, and a shape measuring machine section. The main clamper is configured to hold and fix the material crankshaft. The measurement chuck is conf igured to hold two ends of the material crankshaft held by the main clamper for measuring a shape of the material crankshaft while keeping a posture of the material crankshaft held by the main clamper. The working section is configured to bore a center hole on each of the both end surfaces of the material crankshaft held by the main clamper.

In the center hole boring device, the main clamper holds and fixes the material crankshaft. Then, the measurement chuck holds the material crankshaft while keeping the posture of the material crankshaft fixed by the main clamper, and the shape of the material crankshaft is measured under the condition. After measurement of the shape of the material crankshaft, the main clamper again fixes the material crankshaft being held by the measurement chuck . Then, the working section bores a center hole on each of the both end surfaces of the material crankshaft while the main clamper fixes the material crankshaft.

According to the center hole boring device of the present invention, it is possible to measure the shape of the material crankshaft while the material crankshaft is kept fixed by the main clamper. Simultaneously, it is possible to work the material crankshaft under the condition that the main clamper fixes the material crankshaft again while keeping the posture of the material crankshaft in the shape measurement. In other words, it is possible to execute the shape measurement and the working for the material crankshaft in exactly the same condition (i.e., the same posture). Therefore, when the center holes are bored based on material shape data obtained by the shape measurement, it is possible to bore the center holes easily and accurately in optimal positions based on the shape data.

In a first preferred embodiment, the main clamper is configured to clamp the material crankshaft and keep the posture of the material crankshaft held by the measurement chuck when the working section works the material crankshaft.

According to the first preferred embodiment, the material crankshaft is worked under a condition that a posture of the material crankshaft in the shape measurement is kept in the working. It is thereby possible to bore the center holes easily and accurately in optimal positions based on the shape data.

According to the invention, the Shape measuring machine section is configured to measure the shape of the material crankshaft held by the measurement chuck. In the center hole boring device, the working section is configured to bore the center holes based on measurement data measured by the Shape measuring machine section.

Similarly to the above, in the center hole boring device, the measurement chuck holds the material crankshaft while keeping the posture of the material crankshaft fixed by the main clamper, and the Shape measuring machine section measures the shape of the material crankshaft. Then, the working section bores a center hole on each of the both end surfaces of the material crankshaft based on the shape data obtained by the measurement. In working, the main clamper fixes the material crankshaft while keeping the posture of the material crankshaft in the shape measurement. The working section works the material crankshaft under the condition. Therefore, it is possible to bore the center holes easily and accurately in optimal positions based on the shape data.

In a second preferred embodiment of the center hole boring device, the working section includes a milling section and a drilling section. The milling section is configured to mill the two end surfaces of the material crankshaft. The drilling section is configured to bore a center hole on each of the two end surfaces of the material crankshaft milled by the milling section.

According to the center hole boring device of the second preferred embodiment, the both end surfaces of the material crankshaft are milled and then drilled for boring center holes thereon.

In a third preferred embodiment of the center hole boring device, the measurement chuck and the working section are supported by a single movable member. Further, the measurement chuck and the working section are configured to be selectively opposed to the two end surfaces of the material crankshaft held by the main clamper.

In the center hole boring device, the measurement chuck is moved to a position opposed to the both end surfaces of the material crankshaft fixed by the main clamper in measurement of the material crankshaft. Further, the working section is moved to a position opposed to the both end surfaces of the material crankshaft fixed by the main clamper when working is executed for the material crankshaft after measurement of the shape of the material crankshaft.

According to the center hole boring device of the third preferred embodiment, it is possible to automatically execute the shape measurement and the working for the material crankshaft. Operations will be thereby easy.

The center hole boring device according to a fourth preferred embodiment further includes a control unit configured to control the main clamper, the measurement chuck, and the working section. The control unit is configured to execute controls for activating the components as follows.

First, the main clamper is caused to hold and fix the material crankshaft. Then, the measurement chuck is caused to hold the two ends of the material crankshaft held by the main clamper while keeping the posture of the material crankshaft held by the main clamper. Next, the main clamper is caused to release holding of the material crankshaft held by the measurement chuck, and the measurement chuck is caused to continuously hold the material crankshaft in measuring the shape of the material crankshaft. Further, the main clamper is caused to hold and fix the material crankshaft again while keeping the posture of the material crankshaft held by the measurement chuck after measurement of the shape of the material crankshaft held by the measurement chuck. The measurement chuck is caused to release holding of the material crankshaft held by the main clamper. Then, the working section is caused to work the material crankshaft held and fixed by the main clamper.

According to the center hole boring device of the fourth preferred embodiment, it is possible to automatically execute a series of processing from the shape measurement of the material crankshaft to boring of the center holes.

A center hole boring method according to the present invention includes the following steps.
(1) A first step of causing the main clamper to hold and fix a material crankshaft.
(2) A second step of causing a measurement chuck to hold two ends of the material crankshaft held by the main clamper under a condition that the material crankshaft is held by the main clamper.
(3) A third step of measuring a shape of the material crankshaft held by the measurement chuck.
(4) A fourth step of causing the main clamper to hold and fix the material crankshaft again under a condition that the material crankshaft is held by the measurement chuck after measurement of the shape of the material crankshaft.
(5) A fifth step of boring a center hole on each of two end surfaces of the material crankshaft held by the main clamper. Advantageous Effects of Invention

According to the present invention, it is possible to execute shape measurement and working for a material crankshaft in exactly the same condition (i.e. , the same posture) . Therefore, a center hole can be easily and accurately bored in the material crankshaft at an optimal position based on the shape data of the material crankshaft.

### BRIEF DESCRIPTION OF DRAWINGS

FIG.1 is a configuration diagram of a working system of a material crankshaft.
FIG.2 is an external perspective view of an example of a crankshaft adopting an exemplary embodiment of the present invention.
FIG.3 is an external perspective view of the material crankshaft and top and bottom molds for molding the material crankshaft.
FIG. 4 is a plan view of a center hole boring machine according to the exemplary embodiment of the present invention.
FIG.5 is a perspective view of the center hole boring machine seen from Arrow A in FIG.4.
FIG.6 is a perspective view of the center hole boring machine seen from Arrow B in FIG.4.
FIG.7 is a diagram partially showing an operational sequence of the center hole boring machine.

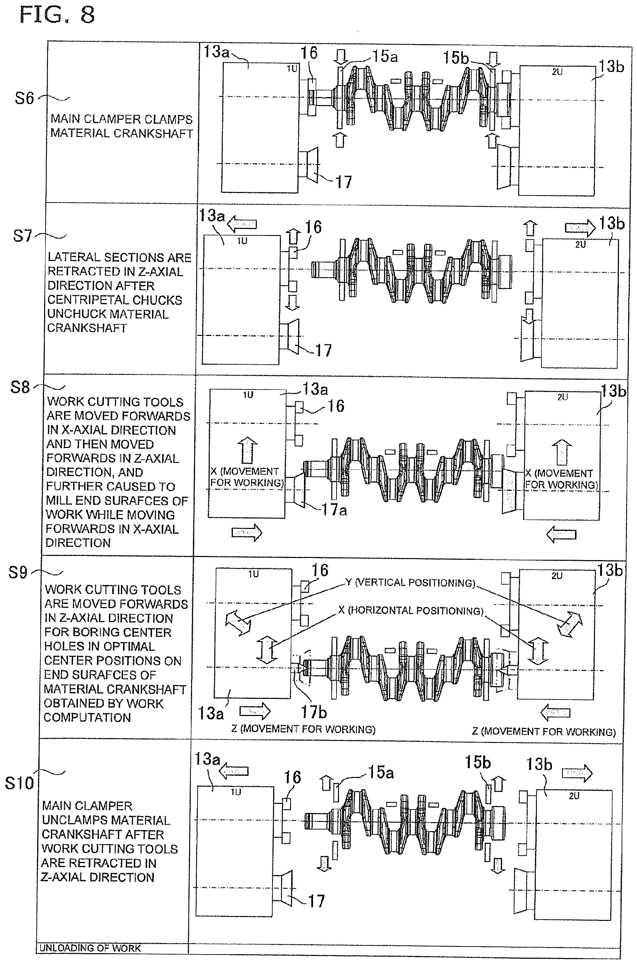

FIG.8 is a diagram partially showing the operational sequence of the center hole boring machine.
FIG.9 is a diagram illustrating components of the material crankshaft, divided into data processing units.
FIG.10 is a diagram for explaining a method of computing the misalignment amount at each of the components.
FIG.11 is a diagram for explaining data interpolation process regarding each of the components.

### DESCRIPTION OF EMBODIMENTS

### [Crankshaft Working System]

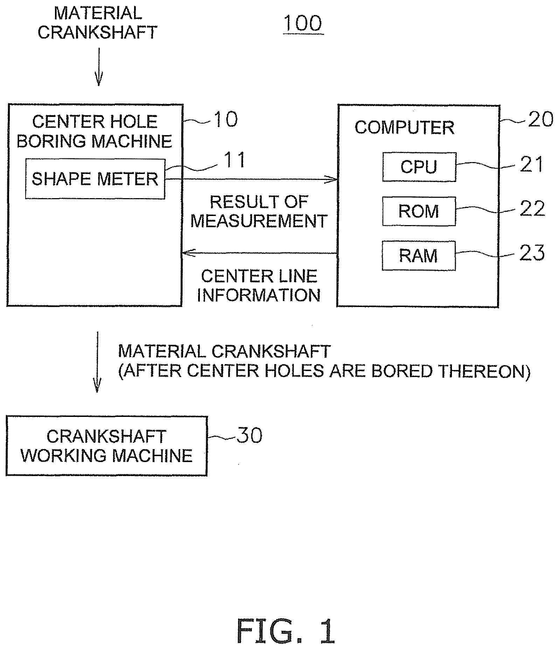

FIG.1 illustrates a crankshaft working system including a center hole boring machine 10 according to an exemplary embodiment of the present invention. The crankshaft working system 100 includes the center hole boring machine 10, a computer 20, and a crankshaft working machine 30. The center hole boring machine 10 is configured to bore a center hole in each of the two end surfaces of the material crankshaft. The computer 20 is an example of a processer configured to determine a position of the center hole to be bored in each of the two end surfaces of the material crankshaft. The crankshaft working machine 30 is configured to execute a predetermined working for the material crankshaft after center holes are bored in the material crankshaft.

The center hole boring machine 10 includes a Shape measuring machine 11, which is an example of a measurement section configured to measure the shape of the material crankshaft.

The Shape measuring machine 11 includes a displacement meter such as a non-contact displacement meter (e.g., a laser displacement meter, an infrared displacement meter, or an LED displacement sensor) or a contact displacement meter (e.g., a differential transformer). The Shape measuring machine 11 is configured to measure the shape of a material crankshaft 1 based on a value measured by the displacement meter. In the present exemplary embodiment, the outer shapes of the respective counterweights of the material crankshaft 1 are only measured as described below. It should be noted that the Shape measuring machine 11 may be a three dimensional digitizer (i.e., an image scanner) configured to measure a measurement target from a plurality of different positions for generating three dimensional shape data of the entire shape of a material crankshaft.

The computer 20 includes a CPU (Central Processing Unit) 21, a ROM (Read Only Memory) 22, and a RAM (Random Access Memory) 23.

The ROM 22 is configured to store a variety of programs to be run by the CPU 21 and a variety of information. In the present exemplary embodiment, the ROM 22 is configured to preliminarily store a processing program for determining positions of center holes in the material crankshaft 1 to be described. Further, the ROM 22 is configured to preliminarily store three dimensional shape data of the design of the material crankshaft 1 (hereinafter referred to as "three dimensional shape design data"). The outer shape data of the design of the respective counterweights of the material crankshaft 1 can be obtained from the three dimensional shape design data. Further, the ROM 22 is configured to preliminarily store the content of working to be executed on the material crankshaft 1 by the crankshaft working machine 30.

The RAM 23 is configured to be used as a storage area for storing programs and data, or as a work area for storing data to be used for processes executed by the CPU 21.

### [Material Crankshaft]

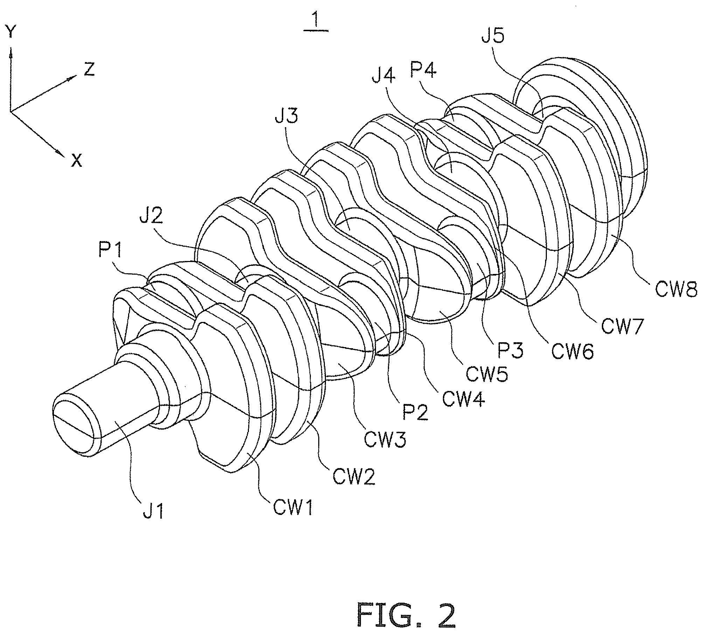

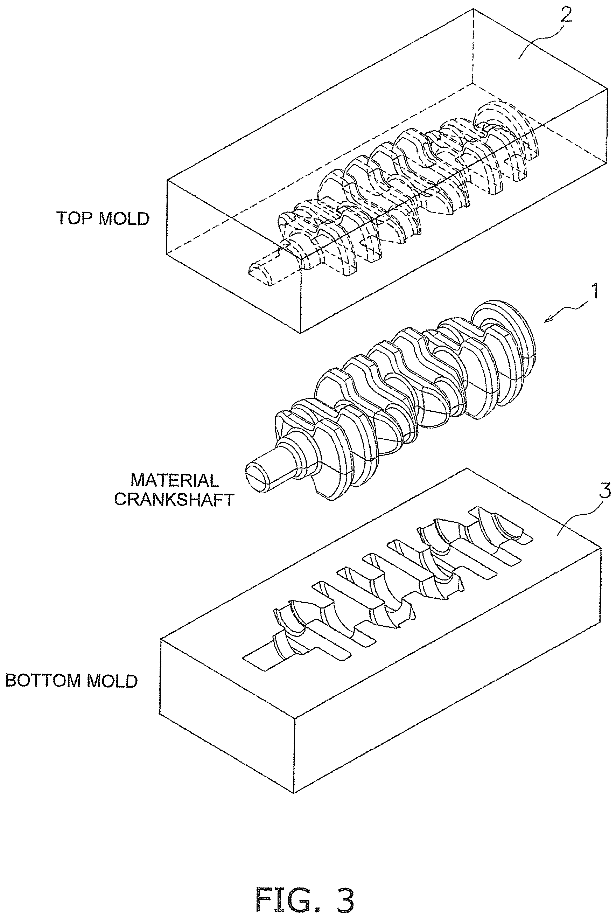

The material crankshaft 1, illustrated in FIG.2, is an example of a material crankshaft to be worked by the center hole boring machine 10 according to the present exemplary embodiment of the present invention. The material crankshaft 1 is herein used for the serial 4-cylinder engines. As illustrated in FIG.3, the material crankshaft 1 is molded through forging, using a top mold 2 and a bottom mold 3. It should be noted that the present invention is similarly applicable to a material crankshaft molded through casting.

The material crankshaft 1 includes main journals J (J1 to J5), pin journals P (P1 to P4) and counterweights CW (CW1 to CW8). In the material crankshaft 1, the following components are sequentially disposed in a Z-axial direction: a main journal J1, a counterweight CW1, a pin journal P1, a counterweight CW2, a main journal J2, a counterweight CW3, a pin journal P2, a counterweight CW4, a main journal J3, a counterweight CW5, a pin journal P3, a counterweight CW6, a main journal J4, a counterweight CW7, a pin journal P4, a counterweight CW8, and a main journal J5.

### [Structure of Center Hole Boring Machine]

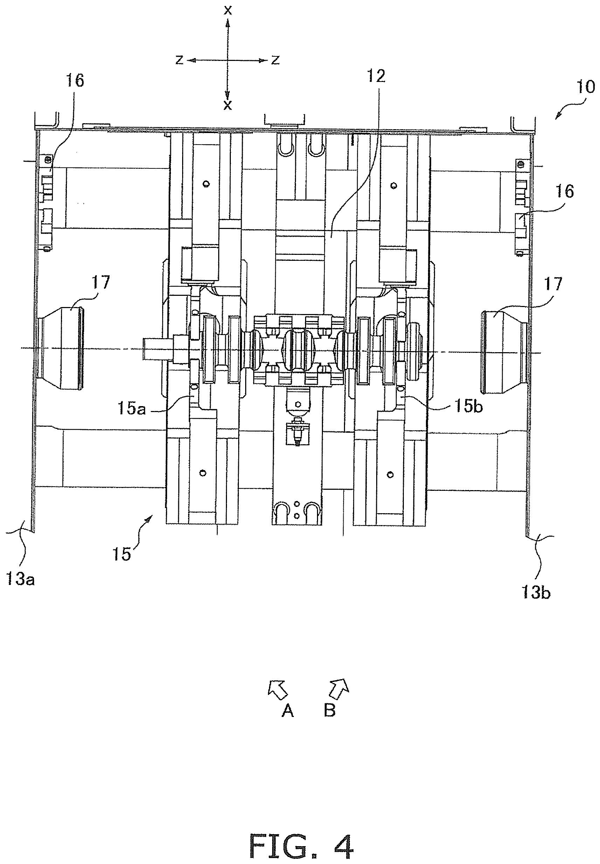

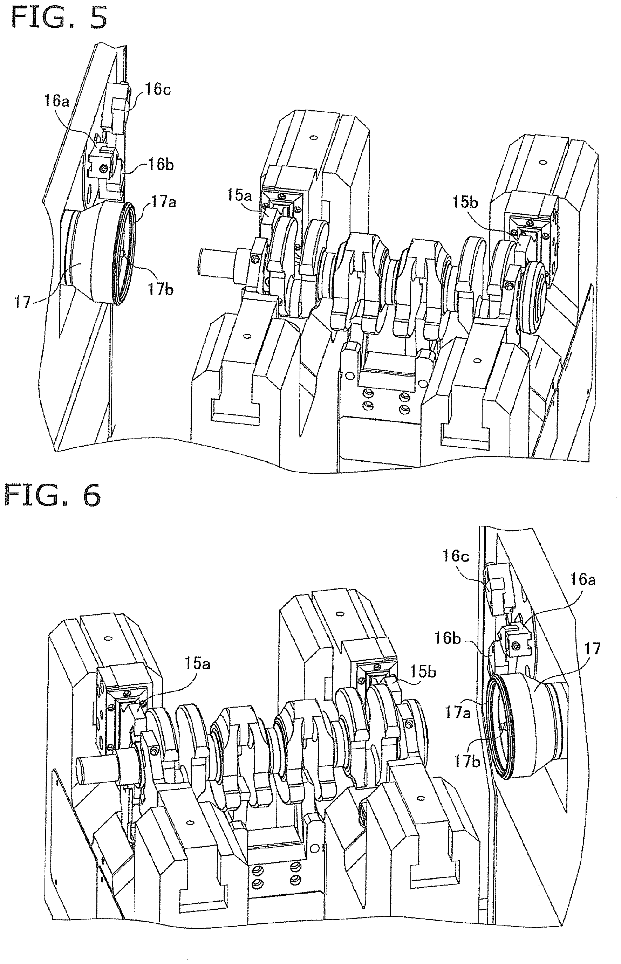

FIG.4 is a plan view of the center hole boring machine 10. FIG.5 is a fragmental perspective view of the center hole boring machine 10 viewed along Arrow A in FIG.4, whereas FIG.6 is a fragmental perspective view of the center hole boring machine 10 viewed along Arrow B in FIG.4.

The center hole boring machine 10 includes a base section 12 and a pair of lateral sections 13a, 13b. The lateral sections 13a, 13b are disposed on two ends of the base section 12 while being opposed to each other. In FIG.4, the pair of the lateral sections 13a, 13b is configured to be moved in a vertical direction (i.e., an X-axial direction), a perpendicular direction to the drawing (i.e., a Y-axial direction) and a transverse direction (i.e., a Z-axial direction) with respect to the base section 12.

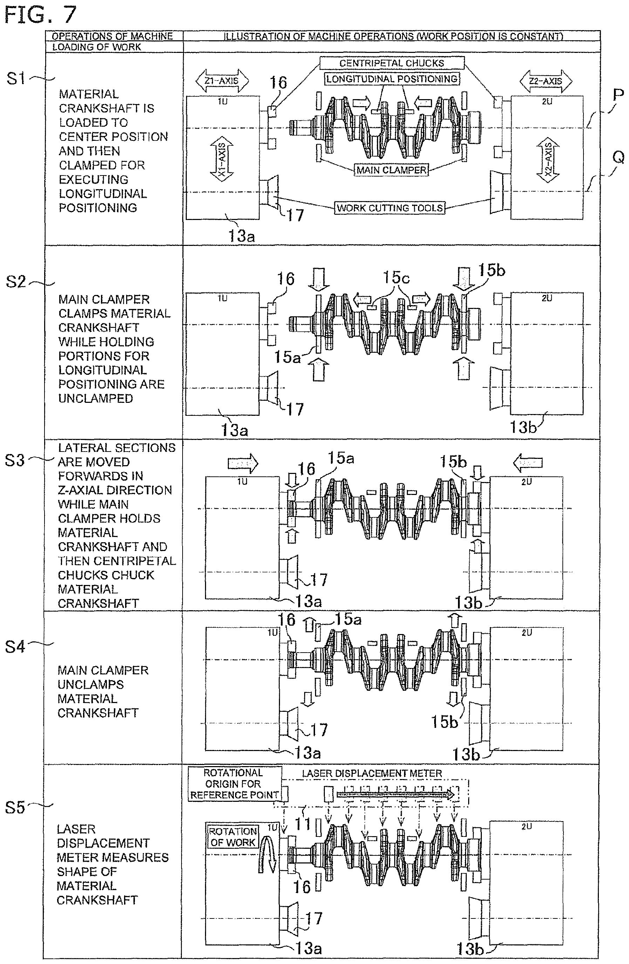

The center hole boring machine 10 includes a main clamper 15, a pair of centripetal chucks (i.e., measurement chucks) 16, a pair of work cutting tools (i.e., a working section) 17, and a laser displacement meter (see FIG.7). The main clamper 15 is fixed on the base section 12. The centripetal chucks 16 are horizontally opposed to each other. The work cutting tools 17 are horizontally opposed to each other, similar to the centripetal chucks 16. The laser displacement meter corresponds to the Shape measuring machine 11. One of the centripetal chucks 16 and one of the work cutting tools 17 are disposed on each of the lateral sections 13a, 13b. Each of the centripetal chucks 16 and the work cutting tools 17 is allowed to move, in response to movements of each of the lateral sections 13a, 13b as driven by a driving section (not illustrated in the figure), to a position where it is opposed to an end surface of the material crankshaft 1 fixed to the main clamper 15.

The main clamper 15 is configured to hold and fix the material crankshaft 1. The main clamper 15 includes a pair of first holding portions 15a, a pair of second holding portions 15b, and a pair of third holding portions 15c (see holding portions depicted by "longitudinalpositioning"inFIG.7). The first holding portions 15a are configured to transversely (i.e., X-axial directionally) hold the main journals J1 disposed on one of the two ends of the material crankshaft 1, while the second holding portions 15b are configured to transversely hold the main journal J5 disposed on the other end of the material crankshaft 1. The third holding portions 15c are configured to hold two counterweights disposed axially in an intermediate part of the material crankshaft 1, with the counterweights axially interposed between the third holding portions 15c.

Each of the centripetal chucks 16 includes three chuck pawls 16a, 16b, 16c disposed at equal angular intervals. Each centripetal chuck 16 is configured to rotate about a rotation axis P (see FIG.7). It should be noted that the three chuck pawls 16a to 16c of each centripetal chuck 16 are movable along the shape of a work (i.e., the material crankshaft) and are thereby allowed to hold the work.

Each of the work cutting tools 17 includes a milling blade 17a and a drilling blade 17b. The milling blade 17a is used for milling the end surface of the material crankshaft 1. The drilling blade 17b is used for boring a center hole in the end surface of the material crankshaft 1. It should be noted that the drilling blade 17b is disposed inward (rearward) of the milling blade 17a. When the milling blade 17a mills the end surface of the material crankshaft, the drilling blade 17b is prevented from making contact with the end surface of the material crankshaft. When the drilling blade 17b drills the end surface of the material crankshaft, on the other hand, the milling blade 17a is disposed so as to surround the outside of the end surface of the material crankshaft. The milling blade 17a is thereby prevented from making contact with the end surface of the material crankshaft in drilling. Further, the milling blade 17a and the drilling blade 17b are both rotatable about a rotation axis Q (see FIG. 7).

### [Control Process of Center Hole Boring Machine]

A control process of the center hole boring machine 10 thus structured will be hereinafter explained with reference to an operational sequence diagram shown in FIG.7.

In Step S1 of FIG.7, the material crankshaft 1 is disposed in a center position of the main clamper 15. Then, counterweights of the material crankshaft 1 are fixed while being axially interposed between the third holding portions 15c of the main clamper 15 for longitudinally (i.e., axially) positioning of the material crankshaft 1.

Next, in Step S2, the first holding portion 15a holds the main journal J1 disposed on one of the two ends of the material crankshaft 1, while the second holding portion 15b holds the main journal J5 disposed on the other end of the material crankshaft 1. Subsequently, the third holding portions 15c release the aforementioned counterweights. Accordingly, the material crankshaft 1 is [t1] firmly fixed by the main clamper 15.

In Step S3, the pair of the lateral sections 13a, 13b moves closer to the material crankshaft 1 in the Z-axial direction while the material crankshaft 1 is firmly held by the main clamper 15. Further, the pair of the centripetal chucks 16 holds two ends of the material crankshaft 1. In this case, the material crankshaft 1 is firmly held by the main clamper 15. The respective chuck pawls 16a to 16c are thereby allowed to be moved along a posture of a work (i.e., the material crankshaft 1) held by the main clamper 15 due to the feature of the centripetal chucks 16, and hold the material crankshaft 1 in the position. In other words, the material crankshaft 1, currently held by the centripetal chucks 16, keeps the posture thereof held by the main clamper 15.

After the material crankshaft 1 is thus held by the centripetal chucks 16, the first and second holding portions 15a, 15b of the main clamper 15 release the material crankshaft 1 in Step S4.

Next, in Step S5, the centripetal chucks 16 are rotated for rotating the material crankshaft 1. Simultaneously, the laser displacement meter 11 scans the material crankshaft 1 along the Z-axial direction for obtaining shape data of the material crankshaft 1. It should be noted that explanation will be hereinafter made for a series of processes of reproducing actual shape data of the material crankshaft 1 from the measured data obtained through measurement of the shape of the material crankshaft 1 and determining positions of center holes.

After measurement of the shape of the material crankshaft 1 is completed in the aforementioned Step S5, the posture of the material crankshaft 1 is set to be identical to the posture thereof in Step S3 preceding the shape measurement. In Step S6, the first and second holding portions 15a, 15b of the main clamper 15 firmly hold the material crankshaft 1 while the centripetal chucks 16 continue to hold the material crankshaft 1.

In Step S7, the centripetal chucks 16 release the material crankshaft 1. Then, the pair of lateral sections 13a, 13b is moved away from the material crankshaft 1 for separating the centripetal chucks 16 from the material crankshaft 1.

Next, in Step S8,the pair of lateral sections 13a, 13b, in other words , the work cutting tools 17, move towards the material crankshaft 1 (in the X-axial direction) and then move in the axial direction (i.e., the Z-axial direction) of the material crankshaft 1. The work cutting tools 17 mill the end surfaces of the material crankshaft 1 while further moving in the X-axial direction. It should be noted that the drilling blades 17b of the work cutting tools 17 are herein prevented from interfering with the milling as described above.

In Step S9, the work cutting tools 17 move in both of the X-axial direction and the Y-axial direction (i.e., the vertical direction) based on center hole positional data. It should be noted that the center hole positional data is obtained from a result of a process of reproducing the actual shape data through computation using the measured data that has been obtained by measuring the shape of the material crankshaft 1 in the aforementioned Step S5. The reproduction process will be hereinafter described. After the work cutting tools 17 move to the center hole positions, the drilling blades 17b of the work cutting tools 17 are driven and moved in the Z-axial direction. Accordingly, a center hole is bored in an optimal center position in each of the end surfaces of the material crankshaft 1.

In Step S10, the work cutting tools 17 are retracted in the Z-axial direction. Further, the first and second holding portions 15a, 15b of the main clamper 15 release the material crankshaft 1. The center hole boring process is thus completed.

### [Reproduction Process of Actual Shape Data]

The following explanation relates to a process of reproducing the actual shape data from the measured data of the material crankshaft 1 obtained in the aforementioned Step S5.

Errors are often produced between the designed size of the material crankshaft and the actual size thereof due to misalignment between the top mold and the bottom mold in molding. For example, errors due to the misalignment between the top and bottom molds are produced when: the top and bottom molds are misaligned in the axial direction (i.e., the Z-axial direction) of the material crankshaft; the top and bottom molds are misaligned in the transverse direction (i.e. , the X-axial direction) of the material crankshaft; the top and bottom molds are separated from each other (i.e., misalignment in the Y-axial direction of the material crankshaft) ; the top and bottom molds are disposed close to each other due to wearing of the matched surfaces thereof (i.e., misalignment in the Y-axial direction of the material crankshaft) ; arrangement angles of the top and bottom molds are misaligned; or a combination of at least two of the above. In any of the above cases, top and bottom portions of the material crankshaft molded by the top and bottom molds respectively are finished in roughly designed shapes of the top and bottom molds . Therefore, it is herein configured to easily and accurately reproduce the actual shape of the material crankshaft and effectively determine positions of center holes by grasping how the respective portions of the material crankshaft are displaced when molded by the top and bottom molds.

It should be noted that material errors include errors due to material bending. When bending occurs in the material crankshaft, however, the entire material crankshaft tends to be bent to a great extent whereas the respective portions of the material crankshaft are not deformed. Similarly to the above, the actual shape of the material crankshaft can be also reproduced by grasping displacement of the respective portions of the material crankshaft in the error due to material bending.

### <Explanation of Respective Portions>

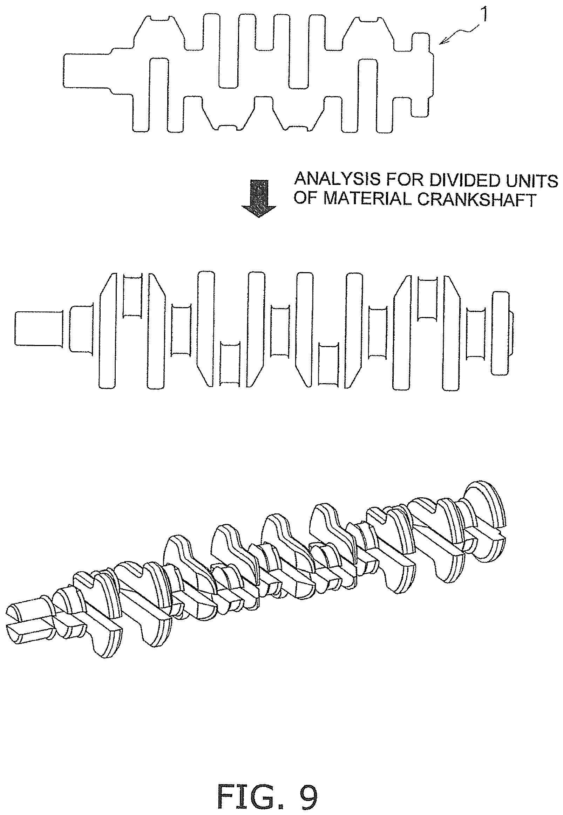

As is obvious from the above, it is effective to execute a predetermined process for a plurality of divided portions of the crankshaft for reproducing the actual shape of the material crankshaft. As illustrated in FIG.9, the crankshaft is herein divided into cylindrical parts and counterweights. Further, each of the divided parts is divided into a portion molded by the top mold and a portion molded by the bottom mold. The divided portions are respectively analyzed. It should be noted that the respective journals hardly have an impact on the imbalance of the crankshaft. Therefore, the process is configured to be executed only for the respective counterweights in the present exemplary embodiment.

### <Process of Measuring Actual Shape of Material>

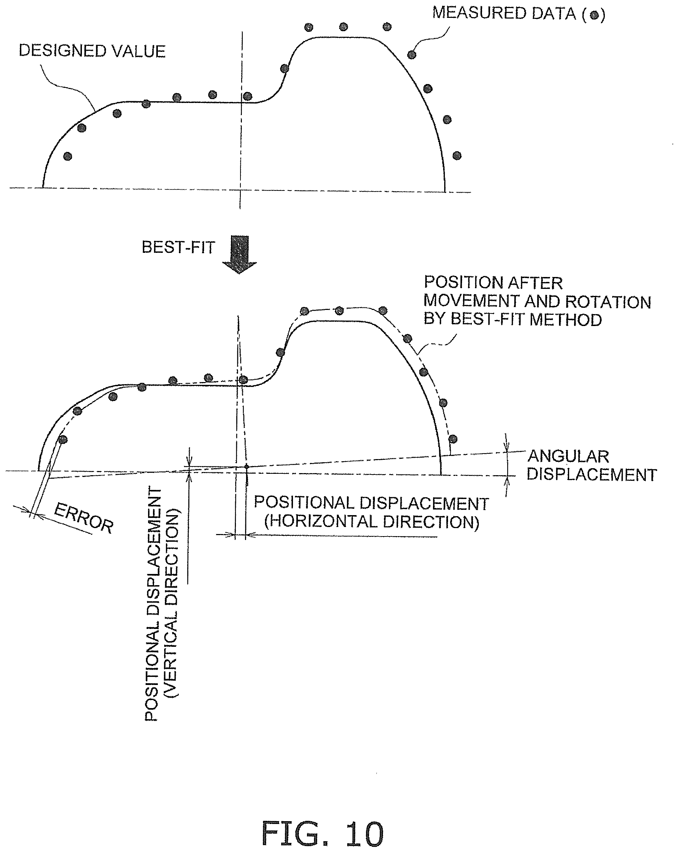

As described above, the laser displacement meter 11, functioning as a Shape measuring machine, is configured to measure the shape of the material crankshaft 1. Measurement positions are set for reliably observing the displacement amount of the respective portions of the material crankshaft 1. Specifically, as depicted with black dots in FIG.10, the measurement positions correspond to the outer peripheral outline positions and axial lateral positions of each counterweight. It should be noted that FIG.10 only schematically illustrates the measurement positions of each counterweight. In the actual situation, the shape of each counterweight is measured in more positions.

### <Computation of Misalignment Amount>

The best-fit method is herein used for computing misalignment amount of the respective portions due to misalignment of the molds. As shown in FIG. 10, the data obtained by measurement does not match the designed value in positions and angles. Therefore, the method of least squares is applied to the measured value and the designed value. Specifically, the designed data is moved and rotated for matching the measured data. Accordingly, a position is found for minimizing the sum of squares of a data error.

A displacement amount is obtained regarding the center of mass of a target portion using the aforementioned best-fit method. In FIG.10, the displacement amount of the center of mass is shown as a vertical positional displacement and a horizontal positional displacement. Then, the aforementioned process is executed for the respective portions (i.e., a portion of each counterweight molded by the top mold and a portion of each counterweight molded by the bottom mold) in order to obtain the displacement amount of the center of mass of each portion. It should be noted that FIG.10 also shows an angular displacement. The angular displacement is configured to be used in a data interpolation process to be described.

### <Data Interpolation Process Among Portions>

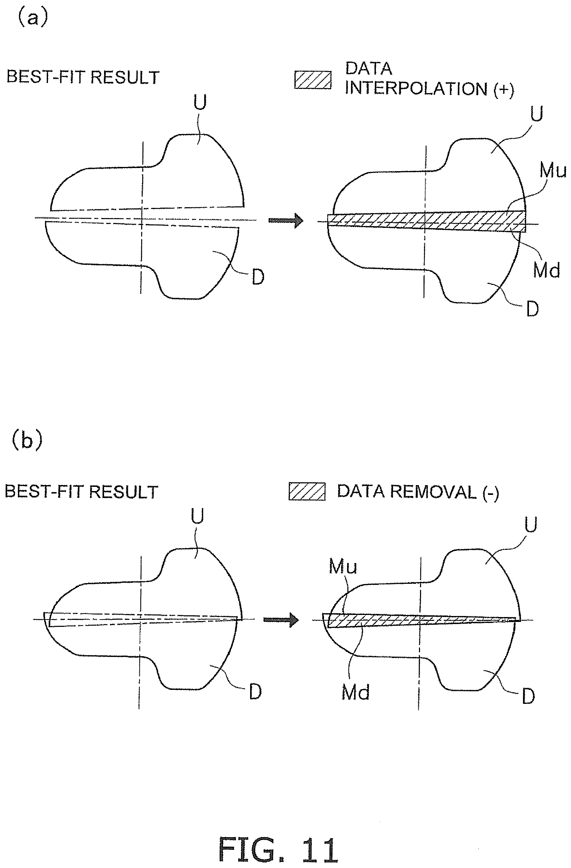

As a result of the aforementioned process for moving the respective portions of each counterweight, portions U and D may not be geometrically continuous, as illustrated in FIGS.11(a) and 11(b). Specifically, the respective portions may be separated from each other as illustrated in FIG.11(a). Alternatively, the respective portions may be overlapped with each other, as illustrated in FIG.11(b). In many cases, the top mold portion U and the bottom mold portion D tend to be separated from each other. Under the condition, data interpolation is required for the portions geometrically disconnected in order to reproduce the actual shape data.

When the respective portions are separated from each other, the interval between the portions is obviously filled with material in the actual shape of the portions. Therefore, data interpolation is required for reproducing the actual shape data. It should be noted that the interpolation process can be executed through computation based on the positional and angular displacements of each portion obtained in the preceding process of computing the misalignment amount.

When the respective portions are overlapped with each other, on the other hand, only one of the overlapped portions is filled with material. Therefore, one of the overlapped portions in the data is required to be removed in the data interpolation process. It should be noted that the process can be also executed through computation based on the positional and angular displacements of each portion similarly to the interpolation process for the aforementioned case.

When no misalignment is produced between the top mold and the bottom mold, a data interpolation process may be simply executed based on the cross-sectional shape of the center part of each counterweight (the term "interpolation" herein refers to a concept including both of data addition and data removal) . When angular misalignment is produced between the top mold and the bottom mold, on the other hand, it is difficult to execute an accurate interpolation process if the data interpolation process is simply executed based on the cross-sectional shape of the center part of each counterweight.

Therefore, when angular misalignment is produced, the cross-section of the center part of each counterweight is divided into minute regions and area distribution of the minute regions is preliminarily obtained. The data interpolation is executed by multiplying the cross-sectional area of each minute region and the thickness corresponding thereto, with reference to the thickness distribution of each counterweight, and summing the multiplication results for the respective minute regions.

As illustrated in FIG.11(a), the actual shape data can be accurately reproduced by computing mass and center of mass respectively for the top mold region U, the bottom mold region D, a top mold intermediate region Mu, and a bottom mold intermediate region Md of each counterweight through the aforementioned process.

### [Process of Determining Center Hole Position]

Next, a center line of inertia of mass points is found where the respective portions (U, D, Mu, and Md) of each counterweight are assumed to be mass points. More specifically, based on the mass and the center of mass computed for each portion of each counterweight in the aforementioned process, a center line of inertia of 32 mass points (the crankshaft for the serial four-cylinder engine is herein used, and the number of mass points is accordingly equal to: 4 x 8 = 32 points) is found by solving a three dimensional linear formula where products of inertia about the center line of inertia is set to be 0 (zero).

Then, a position of a center hole is found by substituting values of z coordinates at positions of the two axial end surfaces of the material crankshaft into the above obtained xy formula of the center line of inertia. The information is transmitted to the center hole boring machine 10. Then, a center hole is bored at a position on each of the two end surfaces of the material crankshaft 1 in accordance with the aforementioned operational sequence.

After boring of the center holes in the material crankshaft, the crankshaft working machine 30 executes a predetermined working mainly for journals of the material crankshaft 1.

### [Features]

Features of the aforementioned exemplary embodiment will be hereinafter described.
(a) When being measured, the material crankshaft 1 is held by the centripetal chucks 16 while keeping the posture held by the main clamper 15. Further, when being worked, the material crankshaft 1 is held by the main clamper 15 again while keeping the posture. Therefore, the material crankshaft 1 can be in the identical posture in working and in measurement. Therefore, center holes can be bored easily and accurately in the optimal positions based on the shape data.
(b) The data interpolation process is executed by measuring the shape data for the respective portions of the material crankshaft molded by the top and bottom molds and computing the misalignment amount for the respective portions based on the fact that material errors occur in the material crankshaft mostly due to misalignment of the top and bottom molds. Therefore, shape measurement for obtaining the actual shape data and the data processing thereof will be simplified.
(c) Data processing is performed by measuring two dimensional data excluding the axial shape of the material crankshaft, based on the fact that the material crankshaft roughly matches the designed shape by the top and bottom molds in the axial direction and an error in the axial direction barely exists. Accordingly, the data processing will be further simplified.
(d) Misalignment of the molds is hardly observed for the journals, and the journals hardly have an impact on the imbalance of the material crankshaft. Therefore, data processing is not performed for journals. Accordingly, the data processing will be further simplified.
(e) In the present exemplary embodiment, the crankshaft for the serial four-cylinder engine (L4) is exemplified. However, the aforementioned computation can be executed for a twisted V6 or V8 crankshaft in exactly the same fashion. Further, for the V6 and V8 crankshaft, the center line of inertia is computed with an additional theoretical counterweight in computation.

### [Other Exemplary Embodiments]

(a) According to the aforementioned exemplary embodiment, a series of steps is executed in the process of reproducing the actual shape data of a material crankshaft and the process of determining positions of center holes in a material crankshaft. In short, the shape of the outer periphery of each counterweight is measured, and mass and misalignment in the center of mass are computed for each counterweight. Based on the result, the center of inertia is computed. However, this is also achievable with the following methods.
(a-1) For example, when a material is molded into a shape that matches the designed shape by the molds, in forging of the material, but material bending occurs in the subsequent processing (e.g., mold stripping, heating treatment, or cooling treatment), it is required to only consider impact of material bending in computing misalignment of the center of mass of the material with respect to a designed value corresponding thereto. In this case, the shape of the outer periphery of each main journal is measured, and a center point of each main journal is arithmetically computed using the method of least-squares based on the result of the shape measurement. Further, a formula for expressing a curve approximating the line connecting the respective center points is computed by the method of least squares. Each counterweight is also herein assumed to be misaligned in accordance with the curve expressed by the formula. Positional misalignment of the center of mass of each counter weight is computed based on the formula of the curve. The center of inertia is then computed with the procedure similar to that in the aforementioned exemplary embodiment. A position of a center hole is determined based on the computed center of inertia.
(a-2) When large misalignments from designed values are not found in the respective portions of the material crankshaft molded by the top and bottom molds, and further when excessive misalignment of the molds and excessive material bending do not occur, it is possible to easily achieve an imbalanced value to be within an allowable value range by boring a center hole in the geometric center of the material crankshaft. In this case, the shape of the outer periphery of each journal is measured for obtaining the geometric center of the material crankshaft. Based on the measured result of the outer periphery of each journal, the center point is computed for each journal using the method of least squares, and the computed center is set as the geometric center. The geometric center is then determined as the position of the center hole.
(b) In the aforementioned exemplary embodiment, the centripetal chucks and the work cutting tools are disposed in a single member (i.e. , the lateral sections 13a, 13b). However, the centripetal chucks and the work cutting tools may be supported by separate members.
(c) In the aforementioned exemplary embodiment, the center hole boring machine 10 is provided with the Shape measuring machine 11. However, the Shape measuring machine 11 may be provided separately from the center hole boring machine 10. In this case, however, the main clamper and its periphery are required to be formed in exactly the same shapes as those in the aforementioned exemplary embodiment for keeping the same posture of the material crankshaft in both the shape measurement and the working, i.e., for achieving reproduction of the posture of the material crankshaft.

### INDUSTRIAL APPLICABILITY

According to the present invention, shape measurement and working of a material crankshaft can be executed in exactly the same condition (i.e., the same posture). It is thereby possible to easily and accurately bore center holes in optimal positions on the material crankshaft based on the shape data.

### REFERENCE SIGNS LIST

- 1: Material crankshaft
- 10: Center hole boring machine
- 11: Shape measuring machine
- 12: Base portion
- 13a, 13b: Lateral portions
- 15: Main clamper
- 16: Centripetal chuck
- 17: Work cutting tool
- 17a: Milling blade
- 17b: Drilling blade

## Claims

1. A center hole boring device configured to bore a center hole for working on each of two end surfaces of a material crankshaft (1), the center hole boring device comprising:
a main clamper (15) configured to hold and fix the material crankshaft (1);
a measurement chuck configured to hold two ends of the material crankshaft (1) held by the main clamper (15) for measuring a shape of the material crankshaft (1) while keeping a posture of the material crankshaft;
a working section configured to bore a center hole on each of the both end surfaces of the material crankshaft held by the main clamper; and
a Shape measuring machine section configured to measure the shape of the material crankshaft (1) held by the measurement chuck;
wherein the working section is configured to bore the center holes based on measurement data measured by the Shape measuring machine section.

2. The center hole boring device according to claim 1, wherein the main clamper (15) is configured to clamp the material crankshaft (1) and keep the posture of the material crankshaft (1) held by the measurement chuck when the working section works the material crankshaft (1).

3. The center hole boring device according to claim 1, wherein the working section includes: a milling section configured to mill the two end surfaces of the material crankshaft (1); and a drilling section configured to bore the center hole on each of the two end surfaces of the material crankshaft (1) milled by the milling section.

4. The center hole boring device according to claim 1, wherein the measurement chuck and the working section are supported by a movable member, the measurement chuck and the working section being configured to be selectively opposed to the two end surfaces of the material crankshaft (1) held by the main clamper (15).

5. The center hole boring device according to claim 1, further comprising:
a control unit configured to control the main clamper (1), the measurement chuck, and the working section, wherein the control unit is configured to execute controls for causing:
the main clamper (1) to hold and fix the material crankshaft (15);
the measurement chuck to hold the two ends of the material crankshaft (1) held by the main clamper (15) while keeping the posture of the material crankshaft (1);
the main clamper (15) to release the material crankshaft (1) held by the measurement chuck;
the measurement chuck to continuously hold the material crankshaft (1) in measuring the shape of the material crankshaft (1);
the main clamper (15) to hold and fix the material crankshaft (1) again while keeping the posture of the material crankshaft (1) held by the measurement chuck after the measurement of the shape of the material crankshaft (1);
the measurement chuck to release the material crankshaft (1) held by the main clamper (15); and
the working section to work the material crankshaft (1) held by the main clamper (15).

6. A center hole boring method of boring a center hole for working on each of two end surfaces of a material crankshaft (1), the center hole boring method comprising:
a first step of causing a main clamper (15) to hold and fix the material crankshaft (1);
a second step of causing a measurement chuck to hold two ends of the material crankshaft (1) held by the main clamper (15) under a condition that the material crankshaft (1) is kept held by the main clamper (15);
a third step of measuring a shape of the material crankshaft (1) held by the measurement chuck;
a fourth step of causing the main clamper (15) to hold and fix the material crankshaft (1) again under a condition that the material crankshaft (1) is held by the measurement chuck after the measurement of the shape of the material crankshaft (1); and
a fifth step of boring a center hole on each of the two end surfaces of the material crankshaft (1) held by the main clamper (15).

## Patentansprüche

1. Zentrallochbohrvorrichtung, die zum Bohren eines Zentrallochs für das Bearbeiten jeder von zwei Endflächen einer Materialkurbelwelle (1) ausgebildet ist, wobei die Zentrallochbohrvorrichtung umfasst:
einen Hauptspanner (15), der zum Halten und Fixieren der Materialkurbelwelle (1) ausgebildet ist;
ein Messfutter, das so ausgebildet ist, dass es zwei Enden der Materialkurbelwelle (1) hält, die von dem Hauptspanner (15) gehalten wird, um eine Form der Materialkurbelwelle (1) zu messen, während eine Stellung der Materialkurbelwelle beibehalten wird;
einen Bearbeitungsabschnitt, der so ausgebildet ist, dass er an jeder der beiden Endflächen der Materialkurbelwelle, die von dem Hauptspanner gehalten wird, ein Zentralloch bohrt; und
ein Formmessmaschinenabschnitt, der so ausgebildet ist, dass er die Form der vom Messfutter gehaltenen Materialkurbelwelle (1) misst;
wobei der Bearbeitungsabschnitt so ausgebildet ist, dass er die Zentrallöcher auf der Grundlage von Messdaten bohrt, die durch den Formmessmaschinenabschnitt gemessen wurden.

2. Zentrallochbohrvorrichtung nach Anspruch 1, bei der der Hauptspanner (15) so ausgebildet ist, dass er die Materialkurbelwelle (1) klemmt und die Stellung der Materialkurbelwelle (1), die vom Messfutter gehalten wird, wenn der Bearbeitungsabschnitt die Materialkurbelwelle (1) bearbeitet, beibehält.

3. Zentrallochbohrvorrichtung nach Anspruch 1, bei der der Bearbeitungsabschnitt umfasst: einen Fräsabschnitt, der so ausgebildet ist, dass er die beiden Endflächen der Materialkurbelwelle (1) fräst; und einen Bohrabschnitt, der so ausgebildet ist, dass er das Zentralloch auf jeder der beiden Endflächen der Materialkurbelwelle (1) bohrt, die durch den Fräsabschnitt gefräst werden.

4. Zentrallochbohrvorrichtung nach Anspruch 1, bei der das Messfutter und der Bearbeitungsabschnitt von einem beweglichen Teil gestützt sind, wobei das Messfutter und der Bearbeitungsabschnitt so ausgebildet sind, dass sie wahlweise den beiden Endflächen der von dem Hauptspanner (15) gehaltenen Materialkurbelwelle (1) gegenüberliegen.

5. Zentrallochbohrvorrichtung nach Anspruch 1, des Weiteren umfassend:
eine Steuereinheit, die so eingerichtet ist, dass sie den Hauptspanner (1), das Messfutter und den Bearbeitungsabschnitt steuert, wobei die Steuereinheit so eingerichtet ist, dass sie Steuerungen ausführt, die veranlassen, dass:
der Hauptspanner (1) die Materialkurbelwelle (15) hält und fixiert;
das Messfutter die beiden Enden der Materialkurbelwelle (1), die von dem Hauptspanner (15) gehalten wird, hält, während die Stellung der Materialkurbelwelle (1) beibehalten wird;
der Hauptspanner (15) die vom Messfutter gehaltene Materialkurbelwelle (1) freigibt;
das Messfutter die Materialkurbelwelle (1) bei der Messung der Form der Materialkurbelwelle (1) fortdauernd hält;
der Hauptspanner (15) die Materialkurbelwelle (1) nach der Messung der Form der Materialkurbelwelle (1) erneut hält und fixiert, während sie die Stellung der Materialkurbelwelle (1), die vom Messfutter gehalten wird, beibehält;
das Messfutter die von dem Hauptspanner (15) gehaltene Materialkurbelwelle (1) freigibt; und
der Bearbeitungsabschnitt die von dem Hauptspanner (15) gehaltene Materialkurbelwelle (1) bearbeitet.

6. Zentrallochbohrverfahren zum Bohren eines Zentrallochs zum Bearbeiten beider von zwei Endflächen einer Materialkurbelwelle (1), wobei das Zentrallochbohrverfahren umfasst:
einen ersten Schritt, bei dem veranlasst wird, dass der Hauptspanner (15) die Materialkurbelwelle (1) hält und fixiert;
einen zweiten Schritt, bei dem veranlasst wird, dass das Messfutter zwei Enden der Materialkurbelwelle (1), die von dem Hauptspanner (15) gehalten wird, hält, unter einer Bedingung, dass die Materialkurbelwelle (1) von dem Hauptspanner (15) weiterhin gehalten wird;
einen dritten Schritt, bei dem eine Form der von dem Messfutter gehaltenen Materialkurbelwelle (1) gemessen wird;
einen vierten Schritt, bei dem veranlasst wird, dass der Hauptspanner (15) die Materialkurbelwelle (1) erneut hält und fixiert unter einer Bedingung, dass nach der Messung der Form der Materialkurbelwelle (1) die Materialkurbelwelle (1) vom Messfutter gehalten wird;
einen fünften Schritt, bei dem ein Zentralloch an jeder der zwei Endflächen der von dem Hauptspanner (15) gehaltenen Materialkurbelwelle (1) gebohrt wird.

## Revendications

1. Dispositif de forage de trou central configuré pour forer un trou central pour l'usinage sur chacune de deux surfaces d'extrémité d'un vilebrequin matériel (1), le dispositif de forage de trou central comprenant :
un élément de serrage principal (15) configuré pour retenir et fixer le vilebrequin matériel (1) ;
un mandrin de mesure configuré pour retenir deux extrémités du vilebrequin matériel (1) retenu par l'élément de serrage principal (15) pour mesurer une forme du vilebrequin matériel (1) tout en maintenant une position du vilebrequin matériel ;
une section d'usinage configuré pour forer un trou central sur chacune des deux surfaces d'extrémité du vilebrequin matériel retenu par l'élément de serrage principal ; et
une section de machine de mesure de forme configurée pour mesurer la forme du vilebrequin matériel (1) retenu par le mandrin de mesure ;
dans lequel la section d'usinage est configurée pour forer les trous centraux sur la base de données de mesure mesurées par la section de machine de mesure de forme.

2. Dispositif de forage de trou central selon la revendication 1, dans lequel l'élément de serrage principal (15) est configuré pour serrer le vilebrequin matériel (1) et maintenir la position du vilebrequin matériel (1) retenu par le mandrin de mesure lorsque la section d'usinage usine le vilebrequin matériel (1).

3. Dispositif de forage de trou central selon la revendication 1, dans lequel la section d'usinage inclut : une section de fraisage configurée pour fraiser les deux surfaces d'extrémité du vilebrequin matériel (1) ; et une section de perçage configurée pour forer le trou central sur chacune des deux surfaces d'extrémité du vilebrequin matériel (1) fraisées par la section de fraisage.

4. Dispositif de forage de trou central selon la revendication 1, dans lequel le mandrin de mesure et la section d'usinage sont supportés par un élément mobile, le mandrin de mesure et la section d'usinage étant configurés pour être sélectivement opposés aux deux surfaces d'extrémité du vilebrequin matériel (1) retenu par l'élément de serrage principal (15).

5. Dispositif de forage de trou central selon la revendication 1, comprenant en outre :
une unité de commande configurée pour commander l'élément de serrage principal (1), le mandrin de mesure, et la section d'usinage, dans lequel l'unité de commande est configurée pour exécuter des commandes pour faire en sorte que :
l'élément de serrage principal (1) retienne et fixe le vilebrequin matériel (15) ;
le mandrin de mesure retienne les deux extrémités du vilebrequin matériel (1) retenu par l'élément de serrage principal (15) tout en maintenant la position du vilebrequin matériel (1) ;
l'élément de serrage principal (15) libère le vilebrequin matériel (1) retenu par le mandrin de mesure ;
le mandrin de mesure retienne en continu le vilebrequin matériel (1) dans la mesure de la forme du vilebrequin matériel (1) ;
l'élément de serrage principal (15) retienne et fixe le vilebrequin matériel (1), de nouveau tout en maintenant la position du vilebrequin matériel (1) retenu par le mandrin de mesure après la mesure de la forme du vilebrequin matériel (1) ;
le mandrin de mesure libère le vilebrequin matériel (1) retenu par l'élément de serrage principal (15) ; et
la section d'usinage usine le vilebrequin matériel (1) retenu par l'élément de serrage principal (15).

6. Procédé de forage de trou central de forage d'un trou central pour l'usinage sur chacune de deux surfaces d'extrémité d'un vilebrequin matériel (1), le procédé de forage de trou central comprenant :
une première étape pour faire en sorte qu'un élément de serrage principal (15) retienne et fixe le vilebrequin matériel (1) ;
une deuxième étape pour faire en sorte qu'un mandrin de mesure retienne deux extrémités du vilebrequin matériel (1) retenu par l'élément de serrage principal (15) dans une condition où le vilebrequin matériel (1) est maintenu retenu par l'élément de serrage principal (15) ;
une troisième étape pour mesurer une forme du vilebrequin matériel (1) retenu par le mandrin de mesure ;
une quatrième étape pour faire en sorte que l'élément de serrage principal (15) retienne et fixe le vilebrequin matériel (1), de nouveau dans une condition où le vilebrequin matériel (1) est retenu par le mandrin de mesure après la mesure de la forme du vilebrequin matériel (1) ; et
une cinquième étape pour forer un trou central sur chacune des deux surfaces d'extrémité du vilebrequin matériel (1) retenu par l'élément de serrage principal (15).
